# FASCICULE DE BREVET EUROPEEN

(11) **EP 2 935 939 B1**
(45) Date de publication et mention de la délivrance du brevet: **22.02.2017**
(21) Numéro de dépôt: 13815061.0
(22) Date de dépôt: 05.12.2013
(51) Int. Cl.: F16F 15/14, F16F 15/173, F16H 45/02

(54) **DISPOSITIF D'ABSORPTION DE VIBRATIONS**
VORRICHTUNG ZUR ABSORPTION VON VIBRATIONEN
DEVICE FOR ABSORBING VIBRATIONS

(30) Priorité: 21.12.2012 FR 1262542; 21.12.2012 FR 1262529; 21.12.2012 FR 1262554
(43) Date de publication de la demande: 28.10.2015
(73) Titulaire: Valeo Embrayages, 80009 Amiens Cedex 2 (FR)
(72) Inventeur: GRIECO, Giovanni, F-92700 Colombes (FR); VERHOOG, Roel, F-60190 Gournay Sur Aronde (FR)
(74) Mandataire: Cardon, Nicolas
(86) Numéro de dépôt international: PCT/FR2013/052959
(87) Numéro de publication internationale: WO 2014/096614

(56) Documents cités:
- DE-A1-102009 042 804
- DE-A1-102010 034 812
- DE-A1-102010 049 556

## Description

### Domaine technique

La présente invention concerne un dispositif d'absorption de vibrations destiné à la transmission d'un véhicule automobile.

### Etat de la technique

Dans une transmission de véhicule automobile, afin de filtrer les vibrations dues aux acyclismes provoqués par les explosions dans les cylindres du moteur, on utilise classiquement un dispositif d'amortissement, associé à un embrayage qui relie sélectivement le moteur à la boîte de vitesses. Cet embrayage peut être un embrayage à friction pour un véhicule automobile à transmission manuelle, ou être disposé dans un appareil d'accouplement hydrocinétique pour véhicule à transmission automatique comme embrayage de verrouillage. Grâce à ce dispositif d'amortissement, généralement sous la forme d'un volant d'inertie monobloc, d'un volant flexible, ou d'un dispositif d'absorption de vibrations, on atténue l'effet des vibrations du moteur qui seraient autrement transmises au travers de la boîte de vitesses et provoqueraient des chocs, bruits ou nuisances sonores particulièrement indésirables pour les occupants du véhicule automobile.

La recherche de l'obtention d'une filtration toujours plus performante a conduit à intégrer un oscillateur pendulaire aux dispositifs d'absorption de vibrations.

Notamment, on connaît dans l'art antérieur des oscillateurs pendulaires comportant des masselottes aptes à osciller dans un plan orthogonal à l'axe de transmission, leurs masses, leurs géométries et leurs mouvements étant adaptés pour filtrer des gammes du spectre vibratoire du moteur qu'un dispositif d'absorption de vibrations conventionnel ne peut filtrer à lui seul.

Toutefois, une tendance du marché de l'automobile consiste à réduire le nombre de cylindres du moteur tout en maintenant ou en augmentant la puissance développée par le moteur. La puissance développée par chaque cylindre est ainsi augmentée, ce qui amplifie les acyclismes du moteur et génère un spectre vibratoire que les dispositifs d'amortissement précités filtrent difficilement.

Il en résulte également des nuisances, notamment sonores, particulièrement indésirables.

Par ailleurs, les dispositifs d'amortissement destinés aux transmissions de véhicules automobiles disposent d'un espace restreint entre le moteur et les éléments de transmission, notamment dans les véhicules de petite cylindrée destinés à une utilisation urbaine. Il existe donc un besoin pour des dispositifs d'amortissement de plus en plus compacts.

On connaît de WO 2011/147632 un dispositif d'absorption de vibrations protégé par un carter. Les coûts pour fabriquer et monter un tel dispositif sont élevés.

Il existe donc un besoin pour un dispositif d'absorption de vibrations permettant de répondre, au moins partiellement, aux problèmes susmentionnés.

Le document DE 10 2010 049 556 A1 décrit toutes les caractéristiques du préambule de la revendication 1 et est considéré comme étant l'état de l'art le plus proche de l'invention.

### Résumé de l'invention

L'invention propose un dispositif d'absorption de vibrations, destiné à une transmission de véhicule automobile, ayant un axe X de rotation et comportant :
- un support définissant deux pistes de roulement de support radialement extérieures et une piste de roulement de support radialement intérieure,
- une masselotte définissant une piste de roulement de masselotte radialement intérieure et deux pistes de roulement de masselotte radialement extérieures,
- deux corps de roulement extérieurs montés de manière à pouvoir rouler et/ou glisser sur au moins une des pistes de roulement radialement extérieures de support et de masselotte et un corps de roulement intérieur monté de manière à pouvoir rouler et/ou glisser sur au moins une des pistes de roulement radialement intérieures de support et de masselotte, de manière que la masselotte puisse librement osciller sur le support.

Selon un premier aspect, ce dispositif d'absorption de vibrations est remarquable en ce que le corps de roulement intérieur et/ou le support et/ou la masselotte comporte(nt) une butée conformée pour limiter le déplacement axial du corps de roulement intérieur par rapport au support et/ou à la masselotte.

Avantageusement, un tel dispositif d'absorption de vibrations permet une oscillation de la masselotte avec un débattement axial limité. Le filtrage des vibrations du moteur est ainsi amélioré, les inventeurs ayant observé, en particulier pour un moteur développant une puissance par cylindre élevée et dans certaines conditions de marche du moteur, que le mouvement axial de la masselotte peut altérer la qualité du filtrage des vibrations du moteur.

Un dispositif d'absorption de vibrations selon le premier aspect de l'invention peut en particulier encore comporter une ou plusieurs des caractéristiques additionnelles suivantes, suivant toutes les combinaisons possibles :
- Ladite butée est définie par une collerette disposée- sur le corps de roulement intérieur, et/ou par une paroi définie ou portée par le support ou par la masselotte, ladite paroi s'étendant de préférence radialement. Une paroi est dite « portée » par le support lorsqu'elle est définie par une pièce fixée sur le support, par exemple un flasque d'assemblage.
- Le corps de roulement intérieur, de préférence chacun des corps de roulement, comporte une gorge annulaire recevant le support et la masselotte, ladite gorge annulaire étant conformée pour éviter tout échappement dudit support et de ladite masselotte hors de ladite gorge annulaire lors de l'oscillation de la masselotte.
- Le corps de roulement intérieur présente la forme d'un rouleau cylindrique et ladite butée est définie par une paroi définie ou portée par le support ou par la masselotte.
- Le dispositif d'absorption de vibrations comporte des première et deuxième dites butées conformées pour limiter, dans les deux sens, le déplacement axial du corps de roulement intérieur par rapport au support et/ou à la masselotte.
- Le corps de roulement intérieur est constitué d'au moins deux pièces assemblées.
- Au moins un corps de roulement extérieur et/ou le support et/ou la masselotte comporte(nt) des première et deuxième butées conformées pour limiter, dans les deux sens, le déplacement axial du corps de roulement extérieur par rapport au support et/ou à la masselotte.
- La ou lesdites butées sont conformées pour que le débattement maximal axial du corps de roulement considéré, par rapport au support et/ou à la masselotte, soit supérieur à 5%, supérieur à 7% et/ou inférieur à 20%, inférieur à 15%, ou inférieur à 12% de l'épaisseur du support, de préférence d'environ 10% de l'épaisseur du support.
- Le dispositif d'absorption de vibrations comporte au moins un premier flasque d'assemblage porté par le support et définissant une dite butée.
- Le support comporte une fenêtre définissant lesdites pistes de roulement, le premier flasque d'assemblage définissant, avec ladite fenêtre et un deuxième flasque d'assemblage porté par ledit support, une enveloppe encapsulant la masselotte.
- La piste de roulement de support radialement intérieure est, en partant d'une extrémité vers l'autre extrémité, concave, puis convexe, puis à nouveau concave, et/ou les pistes de roulement de support radialement extérieures sont concaves.
- Les corps de roulement ne font pas axialement saillie de la masselotte et/ou du support et/ou de flasques d'assemblage optionnels fixés audit support.

Selon un deuxième aspect, ce dispositif d'absorption de vibrations est remarquable en ce qu'un corps de roulement extérieur et/ou le support et/ou la masselotte comporte(nt) une butée conformée pour limiter le déplacement axial dudit corps de roulement extérieur par rapport au support et/ou à la masselotte.

Comme pour un tel dispositif d'absorption de vibrations selon le premier aspect de l'invention, un dispositif d'absorption de vibrations selon le deuxième aspect de l'invention permet une oscillation de la masselotte avec un débattement axial limité, mais grâce à une limitation du débattement axial du ou des corps de roulement extérieurs.

Un dispositif d'absorption de vibrations selon le deuxième aspect de l'invention peut en particulier encore comporter une ou plusieurs des caractéristiques additionnelles suivantes, suivant toutes les combinaisons possibles :
- Chacun des corps de roulement extérieurs comporte une butée conformée pour limiter le déplacement axial dudit corps de roulement extérieur par rapport au support et/ou à la masselotte.
- Ladite butée est définie par une collerette disposée sur ledit corps de roulement extérieur, et/ou étant définie par une paroi définie ou portée par le support ou par la masselotte, ladite paroi s'étendant de préférence radialement.
- Ledit corps de roulement extérieur, de préférence chacun des corps de roulement, comporte une gorge annulaire recevant le support et la masselotte, ladite gorge annulaire étant conformée pour éviter tout échappement dudit support et de ladite masselotte hors de ladite gorge annulaire lors de l'oscillation de la masselotte, ou ledit corps de roulement extérieur présentant la forme d'un rouleau cylindrique et ladite butée étant définie par une paroi définie ou portée par le support ou par la masselotte.
- Au moins un corps de roulement extérieur et/ou le support et/ou la masselotte comporte des première et deuxième butées conformées pour limiter, dans les deux sens, le déplacement axial du corps de roulement extérieur par rapport au support et/ou à la masselotte.
- La ou lesdites butées sont conformées pour que le débattement maximal axial du corps de roulement considéré, par rapport au support et/ou à la masselotte, soit supérieur à 5%, supérieur à 7% et/ou inférieur à 20%, inférieur à 15%, ou inférieur à 12% de l'épaisseur du support, de préférence d'environ 10% de l'épaisseur du support.
- Le dispositif d'absorption de vibrations comporte au moins un premier flasque d'assemblage porté par le support et définissant une dite butée.
- Le support comportant une fenêtre définissant lesdites pistes de roulement, le premier flasque d'assemblage définissant, avec ladite fenêtre et un deuxième flasque d'assemblage porté par ledit support, une enveloppe encapsulant la masselotte.
- La piste de roulement de support radialement intérieure est, en partant d'une extrémité vers l'autre extrémité, concave, puis convexe, puis à nouveau concave, et/ou les pistes de roulement de support radialement extérieures étant concaves.
- Les corps de roulement ne font pas axialement saillie de la masselotte et/ou du support et/ou de flasques d'assemblage optionnels fixés audit support.

Selon un troisième aspect, ce dispositif d'absorption de vibrations comporte en outre un premier flasque d'assemblage, et est remarquable en ce que ledit premier flasque d'assemblage est fixé sur le support de manière à prendre en sandwich une protection de support servant à limiter l'amplitude d'oscillation de la masselotte par rapport au support.

Un dispositif d'absorption de vibrations selon le troisième aspect de l'invention permet avantageusement une fixation rapide et fiable de la protection de support sur le support.

Un dispositif d'absorption de vibrations selon le troisième aspect de l'invention peut en particulier encore comporter une ou plusieurs des caractéristiques additionnelles suivantes, suivant toutes les combinaisons possibles :
- Le corps de roulement intérieur et/ou un corps de roulement extérieur et/ou les deux corps de roulement extérieurs ne font pas saillie axialement (c'est-à-dire selon l'axe X) dudit premier flasque d'assemblage.
- Le dispositif d'absorption de vibrations comporte en outre un deuxième flasque d'assemblage, le support comportant une fenêtre définissant lesdites pistes de roulement, lesdits premier et deuxième flasques d'assemblage définissant, avec ladite fenêtre, une enveloppe encapsulant la masselotte.
- Ladite protection de support chevauche un bord de ladite fenêtre et s'étend partiellement, voire est pincée entre le support et le premier flasque, et entre le support et le deuxième flasque.
- Ladite protection de support comporte un pion logé dans un orifice ménagé dans ledit premier flasque.
- Ladite protection de support est en un matériau polymère.
- Ledit premier flasque d'assemblage définit une butée de support conformée pour limiter le déplacement axial d'un corps de roulement par rapport au support.
- Ledit corps de roulement extérieur présentant la forme d'un rouleau cylindrique.
- Au moins un des corps de roulement, de préférence chacun des corps de roulement, comporte une gorge annulaire recevant le support et la masselotte, ladite gorge annulaire étant conformée pour éviter tout échappement dudit support et de ladite masselotte hors de ladite gorge annulaire lors de l'oscillation de la masselotte.

Selon un quatrième aspect, ce dispositif d'absorption de vibrations est remarquable en ce que le support comporte une fenêtre traversant le support selon son épaisseur, la masselotte étant, quelle que soit sa position, contenue dans l'enveloppe virtuelle d'axe prismatique Y, parallèle à l'axe X, s'appuyant sur le contour de la fenêtre, et faisant saillie du support axialement.

La forme de fenêtres peut être avantageusement adaptée à la géométrie et à la masse des masselottes, pour modifier les propriétés d'amortissement tout en conservant un encombrement identique.

Les fenêtres présentent de préférence une forme sensiblement complémentaire à la masselotte. Cette forme est adaptée pour permettre l'oscillation de la masselotte tout en conférant une largeur suffisante pour la tenue en centrifugation et la transmission du couple.

Un dispositif d'absorption de vibrations selon le quatrième aspect de l'invention peut en particulier encore comporter une ou plusieurs des caractéristiques additionnelles suivantes, suivant toutes les combinaisons possibles :
- La masselotte fait saillie axialement de part et d'autre de la fenêtre.
- L'épaisseur de la masselotte et/ou d'un corps de roulement est inférieure ou égale à l'épaisseur du support ou à l'épaisseur totale du support et de flasques d'assemblage optionnellement fixés au support.
- Aucun des corps de roulement ne fait axialement saillie de la masselotte et/ou du support et/ou de flasques d'assemblage optionnels fixés audit support.
- Le dispositif d'absorption de vibrations comporte des premier et deuxième flasques d'assemblage, le support comportant une fenêtre définissant lesdites pistes de roulement, lesdits premier et deuxième flasques d'assemblage définissant, avec ladite fenêtre, une enveloppe encapsulant la masselotte et/ou les corps de roulement.
- Ledit premier flasque d'assemblage définit une butée de support conformée pour limiter le déplacement axial d'un corps de roulement par rapport au support.
- Le dispositif d'absorption de vibrations comporte une protection de support servant à limiter l'amplitude d'oscillation de la masselotte par rapport au support, ladite protection de support étant prise en sandwich entre le support d'une part et ledit premier flasque d'assemblage et/ou ledit deuxième flasque d'assemblage d'autre part.
- Au moins un des corps de roulement, de préférence chacun des corps de roulement, comporte une gorge annulaire recevant le support et la masselotte, ladite gorge annulaire étant conformée pour éviter tout échappement dudit support et de ladite masselotte hors de ladite gorge annulaire lors de l'oscillation de la masselotte.

Selon un cinquième aspect, ce dispositif d'absorption de vibrations comporte un premier flasque de protection, fixé au support et se superposant à une première grande face de la masselotte, et optionnellement aux corps de roulement intérieur et/ou extérieurs, de manière à la (les) protéger.

Avantageusement, cette protection augmente la durée de vie du dispositif d'absorption de vibrations, en limitant les interactions physiques entre la masselotte, voire les corps de roulement, et l'extérieur.

Un dispositif d'absorption de vibrations selon le cinquième aspect de l'invention peut en particulier encore comporter une ou plusieurs des caractéristiques additionnelles suivantes, suivant toutes les combinaisons possibles :
- Le dispositif d'absorption de vibrations comporte un deuxième flasque de protection se superposant à une deuxième grande face de la masselotte.
- Le support comportant une fenêtre définissant lesdites pistes de roulement, lesdits premier et deuxième flasques d'assemblage définissant, avec ladite fenêtre, une enveloppe encapsulant la masselotte et/ou les corps de roulement. Avantageusement, les dommages que peut générer la rupture d'une pièce d'un oscillateur pendulaire sont cantonnés à l'enveloppe dans laquelle la rupture s'est produite et n'affectent pas l'oscillation des autres oscillateurs pendulaires.
- Le premier et/ou le deuxième flasque de protection définissent une butée de support limitant le déplacement axial d'un corps de roulement par rapport au support.
- Au moins un des corps de roulement comporte une gorge annulaire recevant le support et la masselotte, ladite gorge annulaire étant conformée pour éviter tout échappement dudit support et de ladite masselotte hors de ladite gorge annulaire lors de l'oscillation de la masselotte.
- Chacun des corps de roulement comporte une gorge annulaire recevant le support et la masselotte, ladite gorge annulaire étant conformée pour éviter tout échappement dudit support et de ladite masselotte hors de ladite gorge annulaire lors de l'oscillation de la masselotte.
- La masselotte et/ou un corps de roulement ne fait pas saillie axialement du support et/ou du premier flasque de protection et/ou du deuxième flasque de protection.
- Le dispositif d'absorption de vibrations comporte une protection de support servant à limiter l'amplitude d'oscillation de la masselotte par rapport au support, ladite protection de support étant prise en sandwich entre le support d'une part et ledit premier flasque d'assemblage et/ou ledit deuxième flasque de protection d'autre part.
- Le support comporte une fenêtre traversant le support selon son épaisseur, la masselotte étant contenue dans l'enveloppe virtuelle d'axe prismatique Y, parallèle à l'axe X, s'appuyant sur le contour de la fenêtre, quelle que soit la position de ladite masselotte.

Le troisième aspect et le cinquième aspect ci-dessus peuvent être, ensemble ou non, combinés avec le quatrième aspect ci-dessus.

Selon un sixième aspect, le support présente la forme d'une plaque d'épaisseur « *e* », l'épaisseur du dispositif d'absorption de vibrations (mesurée suivant la direction de l'épaisseur de ladite plaque, c'est-à-dire axialement), étant inférieure ou égale à 5,0**e*, inférieure ou égale à 3,0**e*, inférieure ou égale à 2,0**e*, inférieure ou égale à 1,5**e*, de préférence inférieure ou égale à 1,3**e,* de préférence inférieure ou égale à 1,1**e*, de préférence sensiblement égale à *e*.

L'encombrement axial du dispositif est donc avantageusement très faible.

L'épaisseur « e » peut être par exemple inférieure à 20 mm, inférieure à 15 mm, inférieure à 10 mm, voire inférieure à 5 mm.

De préférence, aucun corps de roulement ne fait saillie axialement, depuis l'une quelconque des deux grandes faces de ladite plaque et/ou de la masselotte, d'une distance supérieure à 0,2**e*, de préférence supérieure à 0,1**e*, de préférence supérieure à 0,05**e*. De préférence aucun corps de roulement ne fait saillie axialement de l'une quelconque des deux grandes faces de ladite plaque et/ou de la masselotte.

De préférence, la masselotte ne fait pas saillie axialement, depuis l'une quelconque des deux grandes faces de ladite plaque, d'une distance supérieure à 0,2**e*, de préférence supérieure à 0,1**e*, de préférence supérieure à 0,05**e*. De préférence la masselotte ne fait pas saillie axialement de l'une quelconque des deux grandes faces de ladite plaque.

Un oscillateur constitué par de tels masselotte et corps de roulement est donc très fin.

Avantageusement, il peut ainsi s'intégrer facilement dans toute pièce plane tournante d'une transmission de l'état de la technique, servant de support. Il suffit d'y ménager des fenêtres adaptées.

Avantageusement, cette intégration ne conduit pas à augmenter sensiblement l'encombrement axial de la transmission de l'état de la technique.

De préférence, aucune pièce du dispositif d'absorption de vibrations autre que la masselotte et les corps de roulement ne fait saillie axialement depuis l'une quelconque des deux grandes faces de ladite plaque.

De préférence, le dispositif d'absorption de vibrations comporte une protection de support disposée pour amortir le choc de la masselotte sur le support lors de son oscillation. De préférence, la protection de support ne fait pas saillie axialement (de préférence aucune des protections de support ne fait saillie axialement), depuis l'une quelconque des deux grandes faces de ladite plaque, d'une distance supérieure à 0,2**e*, de préférence supérieure à 0,1**e*, de préférence supérieure à 0,05**e*. De préférence la protection de support ne fait saillie axialement de l'une quelconque des deux grandes faces de ladite plaque.

Dans un mode de réalisation, au moins un, voire tous les corps de roulement présentent la forme d'une bobine comportant un rouleau cylindrique pourvu à chacune de ses extrémités d'une collerette.

De préférence, une ou plusieurs réductions locales de l'épaisseur du support sont ménagées localement dans le support et/ou dans la masselotte, en particulier dans les zones susceptibles d'être en contact avec les collerettes lors de l'oscillation de la masselotte, pour adapter le support et/ou la masselotte aux corps de roulement et de préférence limiter, voire supprimer la saillie axiale des corps de roulement par rapport au support et/ou à la masselotte, respectivement.

Dans un mode de réalisation, au moins un, voire tous les corps de roulement présentent la forme d'un rouleau cylindrique disposé dans un logement de la masselotte et/ou dans un logement du support. Ces logements sont conformés pour recevoir le corps de roulement en autorisant son roulement et peuvent en particulier présenter la forme d'évidements hémicylindriques.

L'invention concerne aussi un dispositif de transmission d'un véhicule automobile choisi parmi un embrayage à friction et un convertisseur hydrocinétique, ledit dispositif comportant un dispositif d'absorption de vibrations selon invention.

L'invention concerne enfin un véhicule automobile équipé d'un dispositif de transmission selon l'invention.

### Brève description des figures

L'invention pourra être mieux comprise à la lecture de la description détaillée qui va suivre et à l'examen du dessin annexé, sur lequel :
- la figure 1 représente un dispositif d'absorption de vibrations selon un premier mode de réalisation de l'invention,
- la figure 2 représente, sur une vue agrandie, une vue partielle d'un oscillateur pendulaire dans son mouvement d'oscillation,
- la figure 3 représente une vue éclatée et partielle du support, des corps de roulement intérieur et extérieurs et de la masselotte selon un premier mode de réalisation de l'invention,
- la figure 4 représente une vue axiale partielle d'un dispositif d'absorption de vibrations selon une variante du premier mode de réalisation de l'invention et deux vues en coupe d'un élément oscillant et du support d'un dispositif d'absorption de vibrations selon ce premier mode de réalisation,
- la figure 5 illustre un dispositif d'absorption de vibrations selon une variante du premier mode de réalisation, comportant des flasques d'assemblage et des protections de support,
- la figure 6 représente une vue axiale et une vue en coupe d'un dispositif d'absorption de vibrations selon le mode de réalisation de la figure 5,
- la figure 7 illustre un dispositif d'absorption de vibrations selon un deuxième mode de réalisation de l'invention,
- la figure 8 représente une vue axiale et une vue en coupe d'un dispositif d'absorption de vibrations selon le mode de réalisation de la figure 7,
- la figure 9 présente une vue éclatée des éléments constitutifs du dispositif d'absorption de vibrations selon une variante du deuxième mode de réalisation,
- la figure 10 représente une vue axiale et une vue en coupe d'un dispositif d'absorption de vibrations selon le mode de réalisation de la figure 9, et
- la figure 11 illustre un dispositif d'absorption de vibrations comportant des premier et deuxième flasques de protection.

Dans les différentes figures, des organes identiques ou analogues ont été repérés avec les mêmes références.

### Définitions

Par convention, l'orientation « radiale » est dirigée orthogonalement à l'axe X de rotation du support du dispositif d'absorption de vibrations. L'axe X de rotation définit l'orientation « axiale ».

Par plan ou section « axial », ou respectivement « radial », on entend un plan ou une section dont un vecteur normal est colinéaire à l'axe X de rotation ou respectivement à une orientation radiale.

Les termes « intérieur » et « extérieur » sont utilisés pour définir la position relative à l'axe X, un positionnement intérieur étant plus proche de l'axe X qu'un positionnement extérieur. Par exemple, un corps de roulement extérieur est situé à une distance radiale plus élevée de l'axe X de rotation qu'un corps de roulement intérieur.

Un objet est dit « encapsulé » par une enveloppe ou une surface lorsque cette enveloppe ou surface contient cet objet et est sensiblement fermée (dépourvue d'ouverture vers l'extérieur.

Par souci de clarté, une butée est qualifiée de « butée de support » ou de « butée de masselotte » lorsqu'elle limite le déplacement axial d'un corps de roulement par rapport au support ou à la masselotte, respectivement. A défaut de précision particulière, une « butée » peut être une butée de support et/ou de masselotte.

De même, un flasque est qualifié de « flasque d'assemblage » lorsqu'il contribue à la fixation ou au maintien d'une autre pièce et de « flasque de protection » lorsqu'il contribue à protéger une pièce, un flasque d'assemblage pouvant être un flasque de protection.

Par « comportant un » ou « comprenant un », on entend « comportant au moins un », sauf indication contraire.

Par « définissant un », on entend « définissant au moins un », sauf indication contraire.

### Description détaillée

Les exemples illustrés par le dessin sont des modes de réalisation préférés et sont fournis uniquement à titre illustratif. L'invention n'est donc pas limitée à ces modes de réalisation.

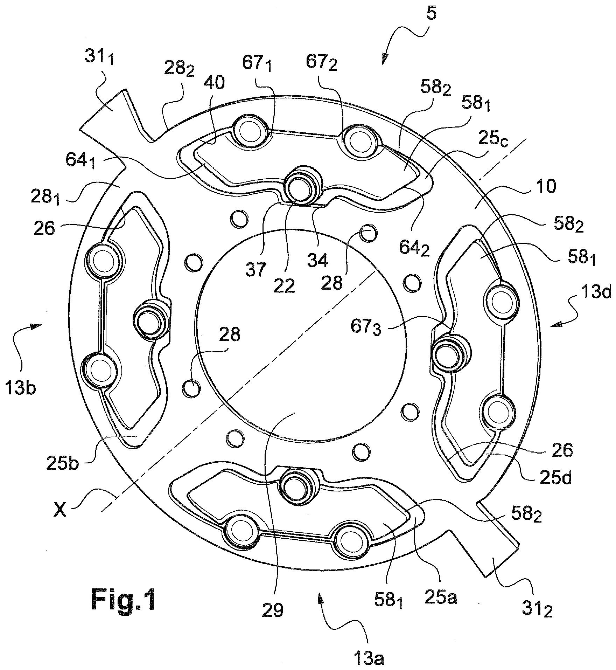

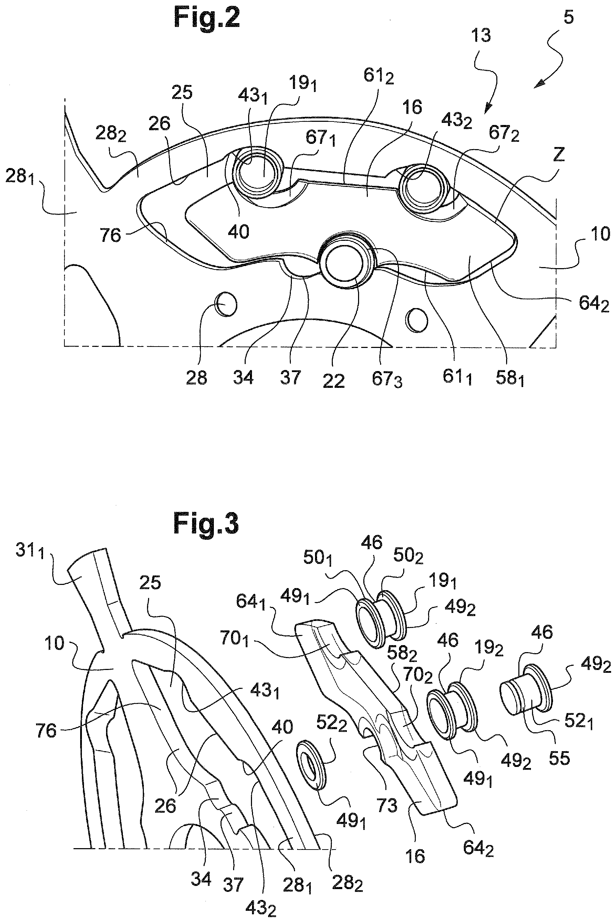

On a représenté sur les figures 1 à 4 un dispositif d'absorption de vibrations 5 selon un premier mode de réalisation. Le dispositif d'absorption de vibrations 5 comporte un support 10 sur lequel sont montés quatre oscillateurs pendulaires identiques, référencés 13a à 13d, montés dans des fenêtres 25à à 25d identiques, respectivement, traversant le support 10 dans son épaisseur. Par la suite, il est fait référence, de manière générale, à un oscillateur pendulaire 13 et à une fenêtre 25. Chaque oscillateur pendulaire 13 comporte une masselotte 16 montée oscillante, à l'aide de deux corps de roulement extérieurs 19₁ et 19₂ et un corps de roulement intérieur 22, dans la fenêtre 25 (voir figure 2).

De préférence, la masselotte et les corps de roulement sont agencés pour que l'oscillation s'effectue dans un plan sensiblement perpendiculaire à l'axe X de rotation du dispositif d'absorption de vibrations.

### Support

Le support 10 présente la forme générale d'un anneau d'axe X de rotation, d'épaisseur sensiblement constante. Il présente des première 28₁ et deuxième 28₂ grandes faces de support, de préférence planes.

L'évidemment central 29 permet ainsi, par exemple, le passage d'un arbre de transmission. L'axe X de rotation du support est alors confondu avec l'axe de rotation de l'arbre de transmission.

Le support présente par ailleurs deux excroissances radialement extérieures sous la forme de pattes 31₁ et 31₂, qui permettent classiquement l'appui du support sur des ressorts d'amortissement, par exemple d'un double volant amortisseur d'un dispositif de transmission d'un véhicule.

Le support comporte des alésages 28 pour la fixation, à l'aide de rivets par exemple, du support à d'autres pièces du dispositif d'absorption de vibrations, par exemple un flasque de protection et/ou un flasque d'assemblage décrits ci-après. Ces alésages 28 peuvent être disposés à égale distance de l'axe X.

De préférence, le support comporte le même nombre de masselottes que de fenêtres.

De préférence, les fenêtres 25 sont à la même distance de l'axe X de rotation et écartées équiangulairement l'une de l'autre autour de l'axe X. Par exemple, sur la figure 1 où le support comporte quatre fenêtres 25, l'angle entre deux fenêtres successives est de 90°.

De préférence, le support 10 peut être constitué par tout matériau supportant une pression de contact de roulement. En particulier il peut être en un alliage métallique, de préférence en un alliage d'aluminium ou en acier, notamment en acier traité, par exemple en 16MnCr5 carbonitruré.

Il peut être notamment obtenu par moulage ou être usiné dans un bloc. Les ouvertures (fenêtres, alésages) peuvent résulter du moulage du support, ou peuvent être obtenues par découpe, perçage ou tout autre moyen d'usinage adapté.

Tel qu'illustré sur les figures 1 à 4, le support définit, sur une partie radialement intérieure 34 du contour 26 de la fenêtre 25, une piste de roulement de support radialement intérieure 37 présentant, en partant d'une extrémité vers l'autre extrémité de la piste, une première portion concave, puis une portion convexe, puis une deuxième portion concave.

Par ailleurs, le support définit, sur une partie radialement extérieure 40 du contour de la fenêtre 25, des première 43₁ et deuxième 43₂ pistes de roulement de support radialement extérieures de forme concave. De préférence, la partie radialement extérieure 40 du contour 26 de la fenêtre 25 est opposée et fait face à la partie radialement intérieure 34.

En variante, une piste de roulement intérieure et/ou extérieure peut aussi être portée par le fond d'une rainure ménagée dans le contour 26. Elle peut être plane, ou peut présenter transversalement un profil courbe, ou semi-circulaire, ou une forme de rainure en « U », ou en « V », ou en « W », pouvant ainsi guider un corps de roulement présentant une forme complémentaire.

Une piste de roulement de support radialement intérieure 37 ou extérieure 43₁-43₂ est délimitée par la zone sur laquelle un corps de roulement intérieur ou extérieur, respectivement, se déplace notamment par roulement et/ou par glissement, au cours de l'oscillation de la masselotte.

Une piste de roulement de support radialement intérieure 37 et une piste de roulement de support radialement extérieure 43₁-43₂ peuvent être situées sur des faces opposées de la fenêtre et se faire face. En variante, et préférentiellement comme illustré sur les figures 1 à 4, elles peuvent être décalées l'une par rapport à l'autre. En particulier, la piste de roulement de support radialement intérieure peut être à mi-distance de deux pistes de roulement de support radialement extérieures, comme représenté.

Quand le contour d'une fenêtre porte plusieurs pistes de roulement de support radialement extérieures 43₁-43₂ et/ou respectivement intérieures 34, ces pistes de roulement de support radialement extérieures et/ou respectivement intérieures peuvent se chevaucher. De préférence, les pistes de roulement de support radialement extérieures et/ou respectivement intérieures sont disjointes.

### Corps de roulement

Par définition, le corps de roulement intérieur 22 est situé plus près du centre de rotation du dispositif d'absorption de vibrations 5 que les corps de roulement extérieurs 19₁-19₂.

De préférence, les écarts angulaires, autour de l'axe X, entre le corps de roulement intérieur 22 d'une part et les premier et deuxième deux corps de roulement extérieurs 19₁-19₂ d'autre part sont sensiblement identiques.

Un corps de roulement intérieur 22 et/ou extérieur 19₁-19₂ présente une forme de révolution. Il peut en particulier présenter la forme d'un cylindre, d'une bille, ou d'un diabolo. En coupe longitudinale médiane (section passant par son axe de révolution), un corps de roulement peut par exemple présenter un profil plat ou en forme de « W » ou en forme de « V ».

Tel qu'illustré notamment sur la figure 2, les corps de roulement intérieur 22 et extérieurs 19₁-19₂ présentent une forme similaire, à savoir la forme d'une bobine comportant un rouleau cylindrique 46 pourvu à chacune de ses extrémités d'une première 49₁ et d'une deuxième 49₂ collerette.

Le diamètre du rouleau cylindrique 46 d'un corps de roulement intérieur et/ou extérieur est de préférence inférieur à 25 mm et/ou supérieur à 5 mm.

Les collerettes s'étendent de préférence sensiblement perpendiculairement à l'axe de révolution du corps de roulement. Chaque corps de roulement présente de préférence une section transversale médiane en forme de « H », comme représenté.

Plus précisément, les surfaces cylindriques des corps de roulement intérieur 22, et respectivement extérieurs 19₁-19₂ sont conformées pour pouvoir glisser et/ou rouler sur la piste de roulement de support radialement intérieure 37, respectivement sur les pistes de roulement de support radialement extérieures 43₁-43₂.

Une première face latérale 50₁ de la première collerette 49₁ d'un corps de roulement intérieur 22 et/ou extérieur 19₁-19₂ définit une première butée du support limitant le déplacement axial du corps de roulement 22 par rapport au support 10 dans un premier sens, et une deuxième face latérale 50₂ de la deuxième collerette 49₂, opposée et en regard de la première face latérale, définit une deuxième butée de support limitant le déplacement axial dans le sens opposé au premier.

La surface cylindrique du rouleau cylindrique 46 et les première et deuxième faces latérales d'un corps de roulement définissent une gorge annulaire recevant le support et, comme décrit ci-après, la masselotte. Cette gorge limite avantageusement le déplacement axial relatif de la masselotte par rapport au support et à la masselotte, tout en autorisant l'oscillation pendulaire

Les diamètres des collerettes des corps de roulement intérieur 22 et extérieurs 19₁-19₂ sont déterminés de façon à limiter le déplacement axial de la masselotte, par rapport au support, quelle que soit la position de la masselotte 16 dans son mouvement d'oscillation. Ces diamètres sont cependant limités, autant que possible, afin que le frottement de la masselotte et du support avec les collerettes 49₁-49₂ n'affecte pas sensiblement le mouvement d'oscillation et n'altère pas la qualité d'amortissement du dispositif d'absorption de vibrations 5.

Le diamètre d'une collerette d'un corps de roulement intérieur et/ou extérieur est de préférence inférieur à 30 mm et/ou supérieur à 7 mm.

Dans un mode de réalisation, une ou plusieurs réductions locales de l'épaisseur du support peuvent être ménagées dans le support pour adapter ce dernier aux corps de roulement ou limiter, voire supprimer la saillie axiale des corps de roulement par rapport au support.

Un corps de roulement intérieur 22 et/ou extérieur 19₁-19₂ est de préférence en un alliage métallique, par exemple en acier, notamment en acier traité, par exemple en 16MnCr5 carbonitruré.

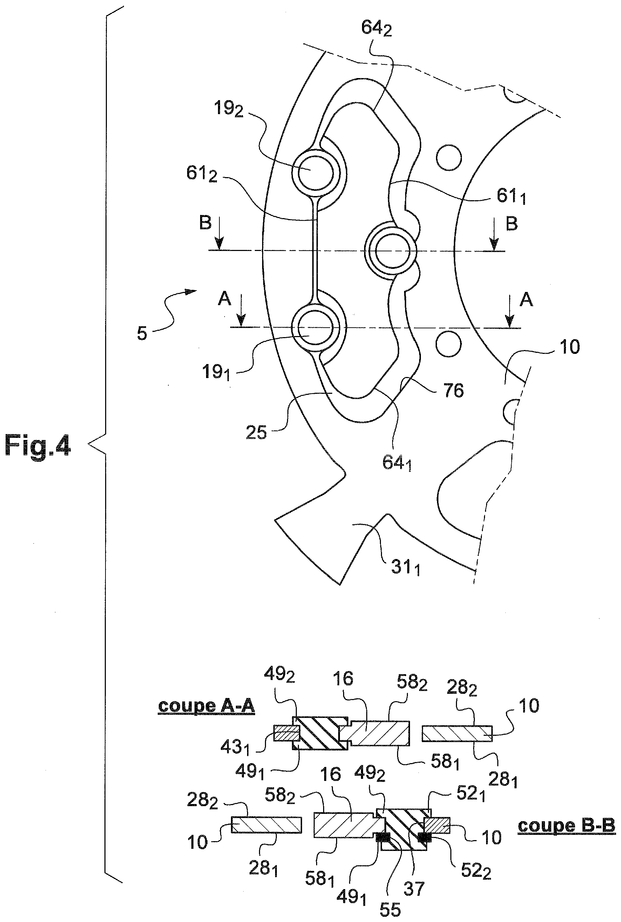

Un corps de roulement intérieur 22 et/ou extérieur 19₁-19₂ peut être monobloc. De préférence tel qu'illustré notamment sur les figures 3 et 4, au moins un des corps de roulement, de préférence au moins le corps de roulement intérieur 22, est constitué d'un assemblage de plusieurs pièces. Ces pièces sont de préférence assemblées de manière irréversible, de préférence après mise en position de la masselotte 16 dans la fenêtre 25.

Une première pièce 52₁ se présente de préférence sous la forme d'un rouleau cylindrique 46 pourvu d'une rainure annulaire 55 proche d'une extrémité du rouleau cylindrique et d'une collerette 49₂ située à l'extrémité opposée. Une deuxième pièce 52₂ se présente de préférence sous la forme d'un anneau dont le diamètre extérieur est de préférence identique à celui de la collerette de la première pièce 52₁ et dont le diamètre intérieur autorise un montage irréversible, par exemple en force ou par dilatation, dans la rainure 55 de la première pièce.

### Masselotte

De préférence, la masselotte 16 présente la forme générale d'une portion annulaire, de préférence sensiblement plate. Elle peut comporter des première 58₁ et deuxième 58₂ grandes faces, une première face radialement intérieure 61₁, une deuxième face radialement extérieure 61₂ et des première 64₁ et deuxième 64₁ faces latérales.

La masselotte peut être en particulier obtenue par moulage et/ou usinage. De préférence, elle est constituée en un alliage métallique, par exemple en acier, notamment en acier traité, par exemple en 16MnCr5 carbonitruré, ou en fonte.

La masse de la masselotte est de préférence supérieure à 50g et/ou inférieure à 1000g.

L'épaisseur de la masselotte peut être localement adaptée pour présenter une forme complémentaire à celle de la gorge annulaire d'un corps de roulement (surfaces 67₁, 67₂ et 67₃). Dans un mode de réalisation, cette adaptation permet avantageusement de limiter, voire de supprimer, toute saillie axiale des corps de roulement hors des plans des grandes faces de la masselotte.

La portion de la face radialement extérieure 61₂, respectivement intérieure 61₁, de la masselotte 16 sur laquelle le corps de roulement intérieur 22, respectivement extérieur 19₁-19₂ peut glisser et/ou rouler définit une piste de roulement de masselotte radialement intérieure 73, respectivement extérieure 70₁-70₂. Les pistes de roulement de masselotte radialement extérieure 70₁-70₂ et/ou intérieure 73 sont de préférence concaves.

La première face latérale 50₁ de la première collerette 49₁ du corps de roulement intérieur 22 et/ou des corps de roulement extérieurs 19₁-19₂ définit une première butée de masselotte limitant le déplacement axial du corps de roulement 22 par rapport à la masselotte 16 dans un premier sens, et la deuxième face latérale 50₂ de la deuxième collerette opposée 49₂ définit une butée de masselotte limitant le déplacement dans le sens opposé au premier.

Tel qu'illustré sur les figures 1 à 4 notamment, le débattement axial du support 10 par rapport à la masselotte 16 est ainsi limité grâce aux butées définies par les collerettes des corps de roulement. La masselotte 16 peut ainsi osciller dans un plan sensiblement commun au plan de rotation du support 10.

### Protections de support

Afin d'amortir le choc de l'oscillateur pendulaire 13 contre le contour 76 de la fenêtre 25, des première 79₁ et deuxième 79₂ protections de support, présentant de préférence la forme d'un cavalier, chevauchent les parties latérales 82₁ et 82₂ du contour 76 de la fenêtre 25, et définissent des première et deuxième butées d'oscillation 80 pour la masselotte dans son mouvement d'oscillation, respectivement, de préférence en évitant tout contact entre la masselotte 16 et le support 10. De préférence, ces protections de support sont en un matériau polymère, de préférence en un matériau qui transforme efficacement l'énergie de la masselotte en chaleur, par exemple en un élastomère type NBR. Ainsi, une protection de support peut absorber l'énergie du choc quand la masselotte percute le support.

La forme de la masselotte est de préférence sensiblement complémentaire à celle des protections de support afin de maximiser l'absorption d'énergie quand la masselotte percute le support.

Dans une variante non représentée, en complément ou en substitution des protections de support 79₁ et 79₂ fixées au support, la masselotte 16 peut aussi porter des protections de support, par exemple sous forme de cavaliers chevauchant la masselotte.

### Fonctionnement

En l'absence de rotation du support, la masselotte 16 repose sur le corps de roulement intérieur et/ou sur un ou plusieurs des corps de roulement extérieurs, sous l'effet de la gravité.

Lors d'une mise en rotation du support autour de l'axe X de rotation, la masselotte 16 s'écarte de l'axe X de rotation sous l'effet de l'accélération centrifuge. Les corps de roulement extérieurs sont alors comprimés entre les pistes de roulement extérieures de support 43₁-43₂ et de masselotte 70. Dans cette situation, aucun contact n'est de préférence établi entre le corps de roulement intérieur 22 et la piste de roulement intérieure de support 37.

Le débattement radial permet avantageusement d'éviter un blocage de la masselotte dans son mouvement d'oscillation.

Lors de la rotation du support, la masselotte 16 est entraînée en rotation autour de l'axe X de rotation. Sous l'effet des variations de vitesse de rotation du support, en particulier des vibrations et des acyclismes, la masselotte peut osciller par rapport au support, dans un plan axial. Les corps de roulement extérieurs 19₁-19₂ et intérieur 22 guident alors le mouvement de la masselotte par rapport au support 10, ces derniers étant logés dans la gorge annulaire ménagée entre les collerettes de chaque corps de roulement. Les corps de roulement extérieurs 19₁-19₂ se déplacent dans un plan axial, par glissement et/ou par rotation, le long des pistes de roulement de support radialement extérieures 43₁-43₂ et/ou le long des pistes de roulement de masselotte radialement extérieures 70₁-70₂.

Le mouvement d'oscillation de la masselotte est par exemple limité par contact avec une zone de contact Z du contour 76 de la fenêtre 25 dans une position de butée d'oscillation, comme représenté, par exemple, sur la figure 2. Les géométries de la masselotte 16, des corps de roulement 22, 19₁-19₂, et de la fenêtre 25 sont de préférence choisies de sorte que, pour cette position, aucun contact ne soit établi entre les faces latérales 64₁-64₂ de la masselotte et le contour 76 de la fenêtre 25.

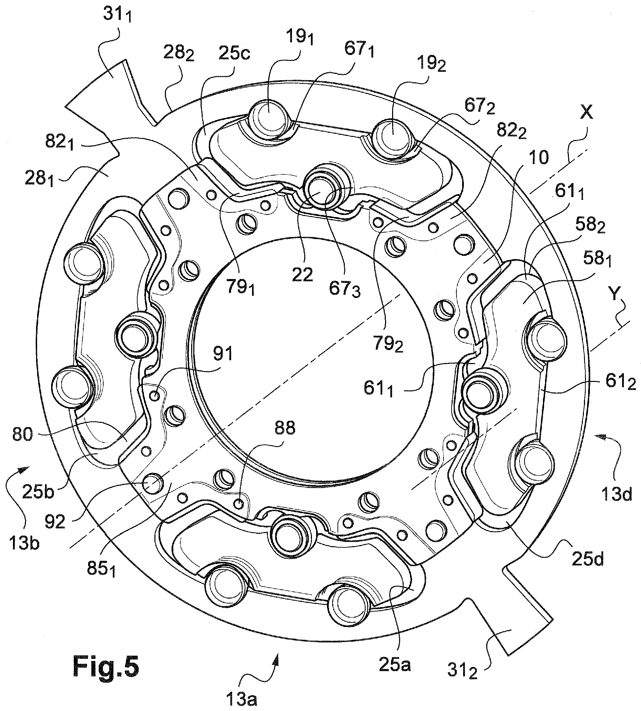

La figure 5 illustre un deuxième mode de réalisation préféré de l'invention.

La masselotte 16 est contenue dans l'enveloppe virtuelle d'axe prismatique (Y) s'appuyant sur le contour 76 de la fenêtre 25, et fait saillie de part et d'autre de la fenêtre 25, de préférence de manière symétrique par rapport au plan médian de la masselotte 16.

Par ailleurs, le dispositif d'absorption de vibrations 5 comporte des premier 85₁ et deuxième 85₂ flasques d'assemblage qui enserrent le support et les protections de support 79₁ et 79₂.

Les premier 85₁ et deuxième 85₂ flasques d'assemblage peuvent chacun être munis d'une ouverture circulaire 115₁-115₂ centrale, pouvant coïncider avec l'évidemment central 29 du support 10, et permettant par exemple le passage de pièces tierces du système de transmission.

Le premier 85₁ et/ou le deuxième 85₂ flasque d'assemblage présente de préférence la forme générale d'un anneau, dont le diamètre intérieur et/ou extérieur est préférentiellement sensiblement égal au diamètre intérieur et/ou extérieur du support, respectivement. Un tel flasque d'assemblage est de préférence en un alliage métallique, par exemple en acier.

Le premier 85₁ et/ou le deuxième 85₂ flasque d'assemblage présente une face plane 86₁-86₂ destinée à venir s'appuyer étroitement sur une des grandes faces 28₁-28₂ du support.

Les protections de support 79₁-79₂ sont munies de pions 88 qui pénètrent, voire s'encliquètent dans des alésages 91 correspondants ménagés dans le support, et/ou dans les premier 85₁ et deuxième 85₂ flasques, de préférence dans le support. Les pions 88 peuvent ainsi empêcher tout déplacement des protections de support 79₁-79₂ selon le plan du support, voire perpendiculairement à ce plan. De préférence, les premier 85₁ et deuxième 85₂ flasques d'assemblage viennent bloquer les protections de support en position sur le support, le support 10 étant pincé axialement entre les deux flasques d'assemblage.

De manière générale, les protections de support peuvent être immobilisées, dans le plan du support, par complémentarité de forme entre les protections de support d'une part et le support et/ou le(s) flasque(s) d'assemblage d'autre part, par exemple avec des pions, et immobilisés axialement par serrage entre le support et le(s) flasque(s) d'assemblage.

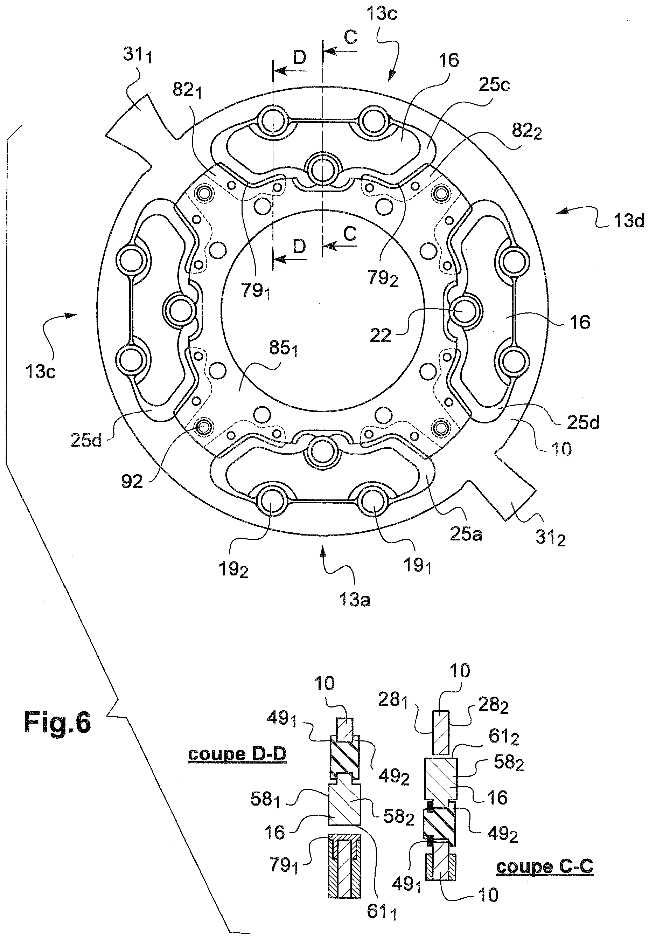

De préférence, les protections de support ne font pas saillie axialement des grandes faces du support, comme la protection de support 79₁ sur la coupe D-D de la figure 6.

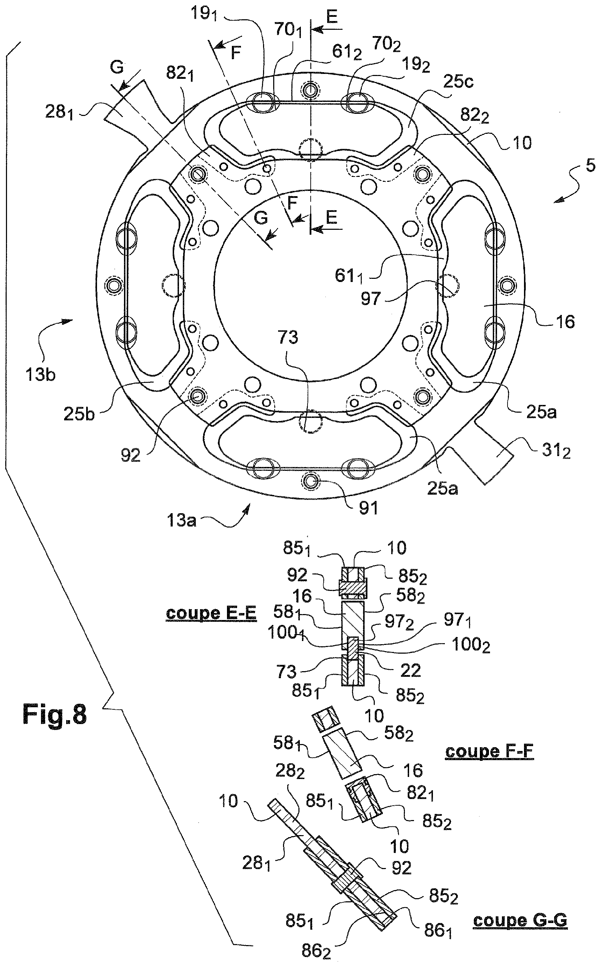

Le support 10 peut être fixé au premier 85₁ et/ou au deuxième flasque 85₂ d'assemblage par tout moyen, par exemple au moyen de rivets 92, de préférence traversant le premier 85₁ et/ou le deuxième 85₂ flasque d'assemblage, et le support 10, comme illustré sur les coupes E-E et G-G de la figure 8.

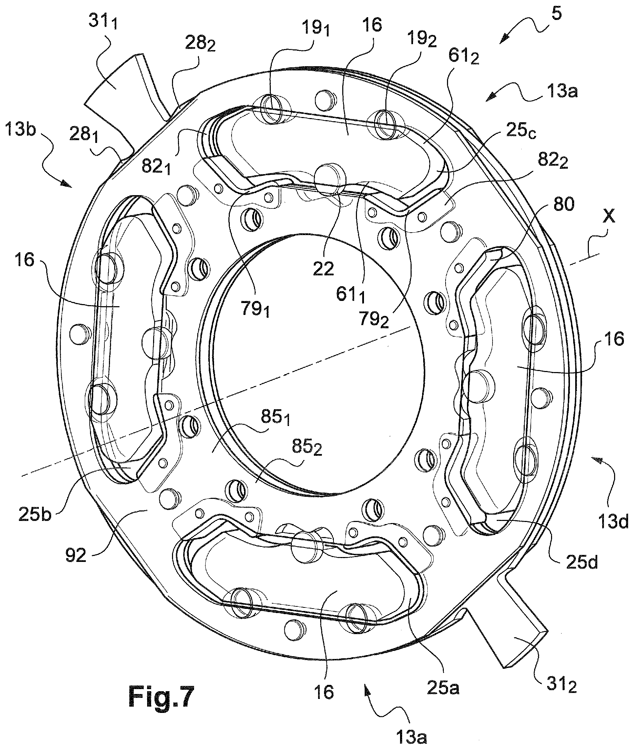

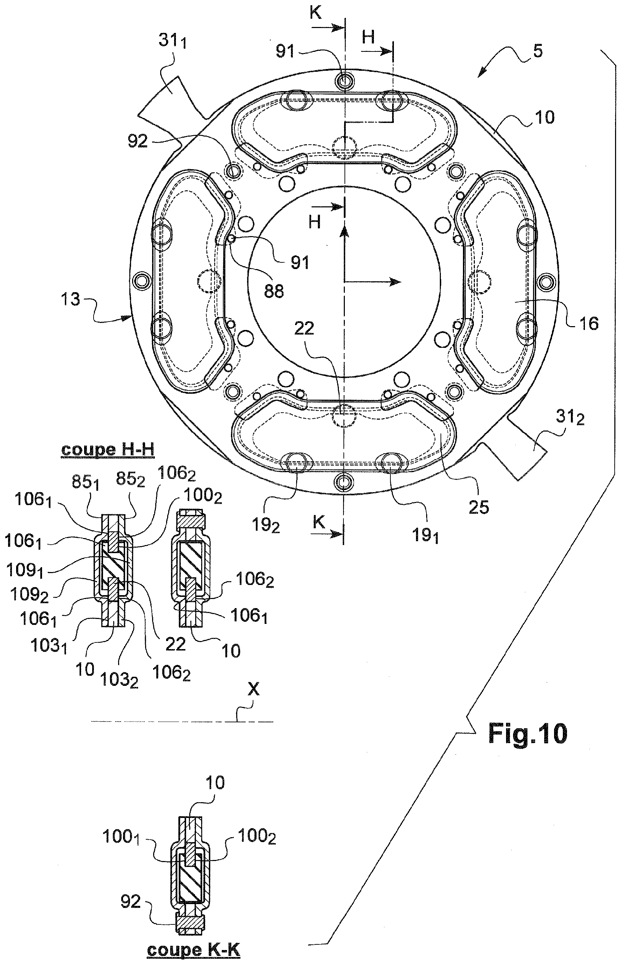

Les figures 7 à 10 illustrent une autre variante de réalisation de l'invention, dans laquelle. les corps de roulement extérieurs 19₁-19₂ et intérieur 22 présentent chacun la forme d'un rouleau cylindrique.

La masselotte 16 comporte, ménagés sur sa face radialement extérieure 61₂, deux logements extérieurs 94₁-94₂ et, sur sa face radialement intérieure, un logement intérieur 97. Ces logements sont conformés pour recevoir les corps de roulement extérieurs et intérieur, respectivement, en autorisant leur roulement, comme illustré sur la section en coupe E-E de la figure 8. Les logements peuvent en particulier présenter la forme d'évidements hémicylindriques. De préférence, le rouleau cylindrique d'un corps de roulement présente un rayon sensiblement égal, mais légèrement inférieur au rayon du logement correspondant.

Les logements extérieurs 94₁-94₂ et intérieur 97 définissent respectivement des pistes de roulement de masselotte extérieures 70₁-70₂ et intérieure 73, comme illustré par exemple sur la figure 8. Les faces latérales 97₁ et 97₂ d'un logement 94₁-94₂ ou 97 définissent des première et deuxième butées de masselotte 100₁-100₂ qui limitent le déplacement axial du corps de roulement 19₁-19₂, 22 disposé dans ledit logement par rapport à la masselotte 16.

Dans une variante non illustrée, le logement 94₁-94₂, 97 peut présenter la forme d'une calotte sphérique, par exemple un évidement hémisphérique, dans laquelle un corps de roulement sous forme d'une bille sphérique est logé. La bille présente de préférence un rayon sensiblement identique (mais légèrement inférieur) au rayon de courbure de la calotte sphérique et la calotte sphérique définit des butées de masselotte limitant le déplacement axial de la masselotte 16 par rapport à la bille.

De même, dans un mode de réalisation non représenté, des logements de forme sensiblement complémentaire aux corps de roulement correspondants peuvent être ménagés dans l'épaisseur de la fenêtre 25 du support afin de recevoir lesdits corps de roulement, de préférence en définissant des butées de support limitant le déplacement axial desdits corps de roulement par rapport au support.

Le premier et/ou le deuxième flasque d'assemblage peuvent définir une ou plusieurs butées de support. Ainsi, un chemin de roulement défini par le support peut ne pas être bordé par des faces latérales définies par le support, mais être bordé par au moins un flasque d'assemblage 85₁ ou 85₂, comme représenté par exemple sur la partie inférieure de la coupe E-E. Les butées de support sont alors définies par des portions 103₁ et/ou 103₂ des faces 86₁ et/ou 86₂ des premier et deuxième flasques d'assemblage, respectivement.

Des portions 103₁-103₂ peuvent ainsi participer, avec le contour intérieur 34 ou les contours extérieurs 40₁-40, respectivement, de la fenêtre (qui portent la piste de roulement intérieure 37, respectivement les pistes de roulement extérieures 43₁-43₂) à la définition d'un logement dans lequel est disposé le corps de roulement intérieur 22, respectivement un corps de roulement extérieur 19₁-19₂.

La coopération des butées de masselotte, définies par les logements ménagés dans la masselotte et des butées de support, définies par les flasques d'assemblage, limite ainsi le déplacement axial des corps de roulement par rapport à la masselotte 16 et au support dans les deux sens. La masselotte peut ainsi osciller dans un plan axial, avec un débattement limité par rapport au support 10.

De manière similaire aux flasques d'assemblage 85₁ et 85₂, dans un mode de réalisation non représenté, un ou deux flasques pourraient être portés par la masselotte pour définir une ou plusieurs parois servant de butées de masselotte, de préférence de manière à bloquer le déplacement axial d'un ou plusieurs corps de roulement par rapport à la masselotte dans les deux sens.

Comme illustré sur les figures 7 et 8, les premier 85₁ et deuxième 85₂ flasques d'assemblage peuvent présenter des ouvertures qui se superposent à la fenêtre 25, excepté éventuellement sur les portions définissant des butées de support 103₁-103₂ pour les corps de roulement. Pour protéger la masselotte 16, et éviter qu'un corps étranger ne vienne s'interposer entre la masselotte 16 et le support 10 et entraver son mouvement d'oscillation, le premier 85₁, respectivement le deuxième flasque d'assemblage 85₂ peut comporter un premier, respectivement un deuxième capot de protection, sous la forme de renfoncements 109₁ et 109₂, respectivement, qui se superposent partiellement, préférentiellement en totalité à la fenêtre 25.

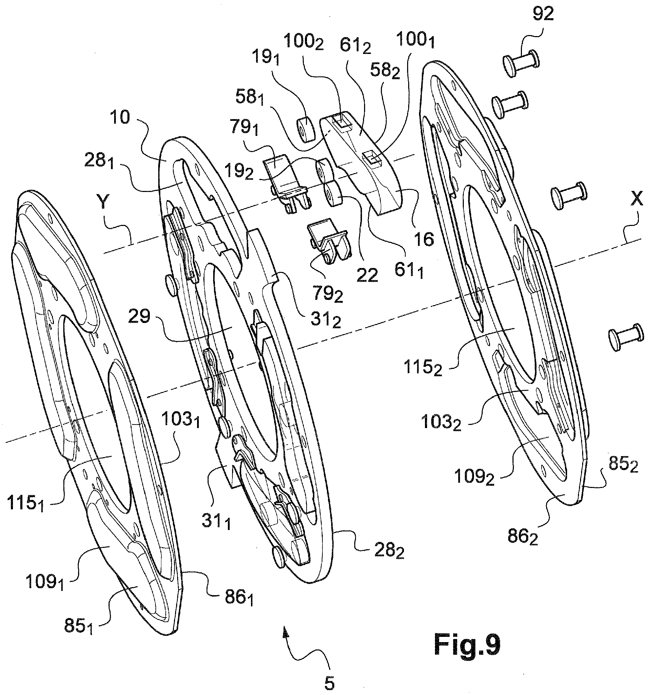

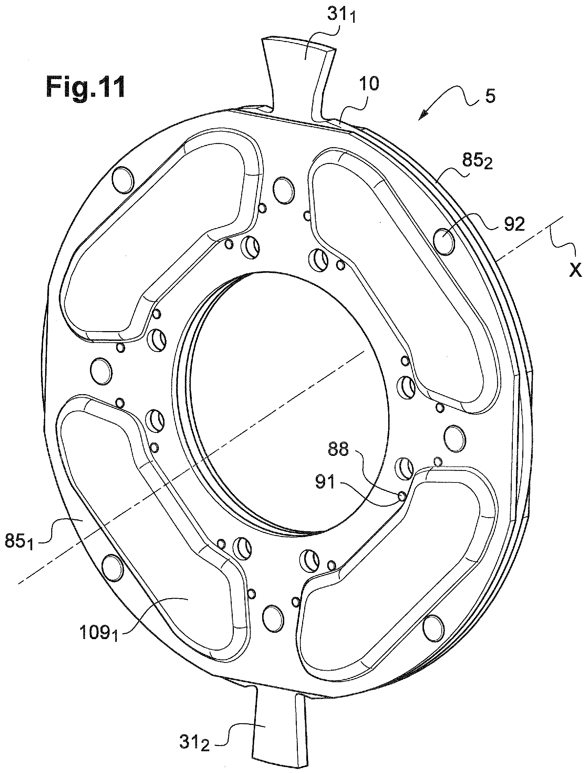

Après assemblage sur le support, les premier 109₁ et deuxième 109₂ renfoncements définissent des enveloppes de protection des première 58₁ et deuxième 58₂ grandes faces de masselotte, respectivement. Les premier 109₁ et deuxième 109₂ renfoncements et le support définissent ainsi une enveloppe de protection 112 qui encapsule la masselotte 16, comme illustré sur les figures 9 à 11. Un flasque d'assemblage 85₁-85₂ peut ainsi définir un flasque de protection pour la masselotte 16.

De préférence, la distance entre le premier renfoncement 109₁, respectivement le deuxième renfoncement 109₂, et la première 58₁, respectivement la deuxième 58₂ grande face de la masselotte 16 est déterminée pour que, lors de son mouvement d'oscillation, aucun contact nuisible à l'efficacité du filtrage des vibrations ne s'établisse entre la masselotte 16 et le premier 85₁et/ou le deuxième 85₂ flasque d'assemblage.

De préférence, un flasque de protection est obtenu par emboutissage d'une plaque, notamment métallique, de façon à former un ou plusieurs renfoncements dans le flasque de protection.

Bien entendu, l'invention n'est pas limitée aux modes de réalisation décrits et représentés.

Notamment, une même fenêtre du support peut comporter plusieurs oscillateurs pendulaires. Le support peut aussi comporter plus, ou au contraire, moins de quatre fenêtres 25. Il peut aussi comporter plusieurs pistes de roulement radialement intérieures.

En outre, toutes les combinaisons possibles des caractéristiques relatives aux différents aspects de l'invention sont envisagées.

## Revendications

1. Dispositif d'absorption de vibrations (5) destiné à une transmission de véhicule automobile, ayant un axe X de rotation et comportant :
un support (10) définissant deux pistes de roulement de support radialement extérieures (43₁, 43₂) et une piste de roulement de support radialement intérieure (37),
une masselotte (16) définissant une piste de roulement de masselotte radialement intérieure (73) et deux pistes de roulement de masselotte radialement extérieures (70₁, 70₂),
deux corps de roulement extérieurs (19₁, 19₂) montés de manière à pouvoir rouler et/ou glisser sur au moins une des pistes de roulement radialement extérieures de support (43₁, 43₂) et de masselotte (70₁, 70₂) et un corps de roulement intérieur (22) monté de manière à pouvoir rouler et/ou glisser sur au moins une des pistes de roulement radialement intérieures de support (37) et de masselotte (73), de manière que la masselotte puisse librement osciller sur le support,
ledit dispositif étant **caractérisé en ce que** le support comporte une fenêtre (25) traversant le support selon son épaisseur, la masselotte étant, quelle que soit sa position, contenue dans l'enveloppe virtuelle d'axe prismatique Y, parallèle à l'axe X, s'appuyant sur le contour (26,76) de la fenêtre, et faisant saillie du support axialement.

2. Dispositif d'absorption de vibrations selon la revendication précédente, la masselotte faisant saillie axialement de part et d'autre de la fenêtre ou,
l'épaisseur de la masselotte et/ou d'un corps de roulement étant inférieure ou égale à l'épaisseur du support ou à l'épaisseur totale du support et de flasques d'assemblage optionnellement fixés au support.

3. Dispositif d'absorption de vibrations selon l'une quelconque des revendications précédentes, dans lequel aucun des corps de roulement ne fait axialement saillie de la masselotte et/ou du support et/ou de flasques d'assemblage optionnels fixés audit support.

4. Dispositif d'absorption de vibrations selon l'une quelconque des revendications précédentes, comportant un premier flasque d'assemblage, fixé au support et se superposant à une première grande face (109₁) de la masselotte, et optionnellement aux corps de roulement intérieur et/ou extérieurs, de manière à la (les) protéger.

5. Dispositif d'absorption de vibrations selon la revendication 4, dans lequel ledit premier flasque d'assemblage est fixé sur le support de manière à prendre en sandwich une protection de support servant à limiter l'amplitude d'oscillation de la masselotte par rapport au support.

6. Dispositif d'absorption selon la revendication 5, dans lequel le corps de roulement intérieur et/ou un corps de roulement extérieur et/ou les deux corps de roulement extérieurs ne fait pas saillie axialement dudit premier flasque d'assemblage.

7. Dispositif selon l'une quelconque des revendications 4 à 6, comportant un deuxième flasque d'assemblage se superposant à une deuxième (109₂) grande face de la masselotte, la fenêtre (25) définissant lesdites pistes de roulement, et lesdits premier et deuxième flasques d'assemblage définissant, avec ladite fenêtre, une enveloppe encapsulant la masselotte et/ou les corps de roulement.

8. Dispositif selon la revendication 7, comportant une protection de support servant à limiter l'amplitude d'oscillation de la masselotte par rapport au support, ladite protection de support étant prise en sandwich entre le support d'une part et ledit premier flasque d'assemblage et/ou ledit deuxième flasque d'assemblage d'autre part, ladite protection de support chevauchant notamment un bord de ladite fenêtre et étant pincée entre le support et le premier flasque, et entre le support et le deuxième flasque.

9. Dispositif d'absorption de vibrations selon la revendication 7 ou 8, dans lequel ladite protection de support comporte un pion logé dans un orifice ménagé dans ledit premier flasque.

10. Dispositif d'absorption de vibrations selon l'une quelconque des revendication 7 à 9, dans lequel le premier et/ou le deuxième flasque de protection définit ou définissent une butée de support (106₁, 106₂) limitant le déplacement axial d'un corps de roulement (19₁, 19₂, 22) par rapport au support.

11. Dispositif d'absorption de vibrations selon l'une quelconque des revendications précédentes, dans lequel au moins un des corps de roulement, de préférence chacun des corps de roulement, comporte une gorge annulaire recevant le support et la masselotte, ladite gorge annulaire étant conformée pour éviter tout échappement dudit support et de ladite masselotte hors de ladite gorge annulaire lors de l'oscillation de la masselotte.

12. Dispositif d'absorption de vibrations selon l'une quelconque des revendications précédentes, dans lequel le support présente la forme d'une plaque d'épaisseur « *e* », l'épaisseur du dispositif d'absorption de vibrations, mesurée suivant la direction de l'épaisseur de ladite plaque, étant inférieure ou égale à 3,0**e*.

13. Dispositif d'absorption de vibrations selon l'une quelconque des revendications précédentes, dans lequel le support présente la forme d'une plaque d'épaisseur « *e* », et dans lequel aucun corps de roulement ne fait saillie axialement, depuis l'une quelconque des deux grandes faces de ladite plaque, d'une distance supérieure à 0,2**e* et/ou dans lequel la masselotte ne fait pas saillie axialement, depuis l'une quelconque des deux grandes faces de ladite plaque, d'une distance supérieure à 0,2**e*.

14. Dispositif d'absorption de vibrations selon la revendication 13, dans lequel aucun corps de roulement ne fait saillie axialement depuis l'une quelconque des deux grandes faces de ladite plaque et/ou dans lequel aucun corps de roulement ne fait saillie axialement de la masselotte et/ou dans lequel la masselotte ne fait pas saillie axialement depuis l'une quelconque des deux grandes faces de ladite plaque.

15. Dispositif de transmission d'un véhicule automobile choisi parmi un embrayage à friction et un convertisseur hydrocinétique, ledit dispositif comportant un dispositif d'absorption de vibrations selon l'une quelconque des revendications précédentes.

## Patentansprüche

1. Schwingungsdämpfungsvorrichtung (5), die für ein Kraftfahrzeuggetriebe bestimmt ist, die eine Drehachse X hat und aufweist:
- einen Träger (10), der zwei radial äußere Trägerlaufbahnen (43₁, 43₂) und eine radiale innere Trägerlaufbahn (37) definiert,
- ein Fliehgewicht (16), das eine radial innere Fliehgewichtlaufbahn (73) und zwei radial äußere Fliehgewichtlaufbahnen (70₁, 70₂) definiert,
- zwei äußere Laufkörper (19₁, 19₂), die so montiert sind, dass sie auf mindestens einer der radial äußeren Träger- (43₁, 43₂) und Fliehgewichtlaufbahnen (70₁, 70₂) laufen und/oder gleiten können, und einen inneren Laufkörper (22), der so montiert ist, dass er auf mindestens einer der radial inneren Träger-(37) und Fliehgewichtslaufbahnen (73) laufen und/oder gleiten kann, so dass das Fliehgewicht frei auf dem Träger schwingen kann,
wobei die Vorrichtung **dadurch gekennzeichnet ist, dass** der Träger ein Fenster (25) aufweist, das den Träger gemäß seiner Dicke durchquert, wobei das Fliehgewicht unabhängig von seiner Stellung in der virtuellen Hülle mit einer Prismenachse Y parallel zur Achse X enthalten ist, sich auf dem Umriss (26, 76) des Fensters abstützt und axial vom Träger vorsteht.

2. Schwingungsdämpfungsvorrichtung nach dem vorhergehenden Anspruch, wobei das Fliehgewicht axial seitlich zu beiden Seiten des Fensters vorsteht oder die Dicke des Fliehgewichts und/oder eines Laufkörpers geringer als die oder gleich der Dicke des Trägers oder die Gesamtdicke des Trägers und von Montageflanschen ist, die optional am Träger befestigt sind.

3. Schwingungsdämpfungsvorrichtung nach einem der vorhergehenden Ansprüche, wobei keiner der Laufkörper axial vom Fliehgewicht und/oder vom Träger und/oder von am Träger befestigten optionalen Montageflanschen vorsteht.

4. Schwingungsdämpfungsvorrichtung nach einem der vorhergehenden Ansprüche, die einen ersten Montageflansch aufweist, der am Träger befestigt ist und eine erste große Seite (109₁) des Fliehgewichts, und optional die inneren und/oder äußeren Laufkörper überlagert, um sie zu schützen.

5. Schwingungsdämpfungsvorrichtung nach Anspruch 4, wobei der erste Montageflansch so am Träger befestigt ist, dass er einen Trägerschutz sandwichartig aufnimmt, der dazu dient, die Schwingungsamplitude des Fliehgewichts bezüglich des Trägers zu begrenzen.

6. Absorptionsvorrichtung nach Anspruch 5, wobei der innere Laufkörper und/oder ein äußerer Laufkörper und/oder die zwei äußeren Laufkörper nicht axial vom ersten Montageflansch vorstehen.

7. Schwingungsdämpfungsvorrichtung nach einem der Ansprüche 4 bis 6, die einen zweiten Montageflansch aufweist, der eine zweite große Seite (109₂) des Fliehgewichts überlagert, wobei das Fenster (25) die Laufbahnen definiert und die ersten und zweiten Montageflansche mit dem Fenster eine Hülle definieren, die das Fliehgewicht und/oder die Laufkörper einhüllt.

8. Vorrichtung nach Anspruch 7, die einen Trägerschutz aufweist, der dazu dient, die Schwingungsamplitude des Fliehgewichts bezüglich des Trägers zu begrenzen, wobei der Trägerschutz zwischen dem Träger einerseits und dem ersten Montageflansch und/oder dem zweiten Montageflansch andererseits sandwichartig aufgenommen wird, wobei der Trägerschutz insbesondere einen Rand des Fensters überlappt und zwischen dem Träger und dem ersten Flansch und zwischen dem Träger und dem zweiten Flansch eingeklemmt ist.

9. Schwingungsdämpfungsvorrichtung nach Anspruch 7 oder 8, wobei der Trägerschutz einen Zapfen aufweist, der in einer im ersten Flansch ausgesparten Öffnung untergebracht ist.

10. Schwingungsdämpfungsvorrichtung nach einem der Ansprüche 7 bis 9, wobei der erste und/oder der zweite Schutzflansch einen Trägeranschlag (106₁, 106₂) definiert oder definieren, der die axiale Verschiebung eines Laufkörpers (19₁, 19₂, 22) bezüglich des Trägers begrenzt.

11. Schwingungsdämpfungsvorrichtung nach einem der vorhergehenden Ansprüche, wobei mindestens einer der Laufkörper, vorzugsweise jeder der Laufkörper, eine Ringnut aufweist, die den Träger und das Fliehgewicht aufnimmt, wobei die Ringnut gestaltet ist, um jedes Austreten des Trägers und des Fliehgewichts aus der Ringnut beim Schwingen des Fliehgewichts zu verhindern.

12. Schwingungsdämpfungsvorrichtung nach einem der vorhergehenden Ansprüche, wobei der Träger die Form einer Platte einer Dicke «e» hat, wobei die Dicke der Schwingungsabsorptionsvorrichtung, gemessen in Richtung der Dicke der Platte, geringer als oder gleich 3,0*e ist.

13. Schwingungsdämpfungsvorrichtung nach einem der vorhergehenden Ansprüche, wobei der Träger die Form einer Platte einer Dicke «e» hat, und wobei kein Laufkörper axial von einer beliebigen der zwei großen Seiten der Platte um einen Abstand von mehr als 0,2*e vorsteht, und/oder wobei das Fliehgewicht nicht axial von einer der zwei großen Seiten der Platte um einen Abstand von mehr als 0,2*e vorsteht.

14. Schwingungsdämpfungsvorrichtung nach Anspruch 13, wobei kein Laufkörper axial von einer beliebigen der zwei großen Seiten der Platte vorsteht, und/oder wobei kein Laufkörper axial vom Fliehgewicht vorsteht, und/oder wobei das Fliehgewicht nicht axial von einer beliebigen der zwei großen Seiten der Platte vorsteht.

15. Getriebevorrichtung eines Kraftfahrzeugs, ausgewählt aus einer Reibungskupplung und einem hydrokinetischen Wandler, wobei die Vorrichtung eine Schwingungsdämpfungsvorrichtung nach einem der vorhergehenden Ansprüche aufweist.

## Claims

1. Device (5) for absorbing vibrations intended for a motor vehicle transmission, having a rotation axis X and including:
- a mounting (10) defining two radially external supporting raceways (43₁, 43₂) and one radially internal supporting raceway (37),
- a counterweight (16) defining a radially internal counterweight raceway (73) and two radially external counterweight raceways (70₁, 70₂),
- two external rolling bodies (19₁, 19₂) mounted so as to be able to roll and/or slide on at least one of the radially external supporting raceways (43₁, 43₂) and counterweight raceways (70₁, 70₂) and an internal rolling body (22) mounted so as to be able to roll and/or slide on at least one of the radially internal supporting raceway (37) and the counterweight raceway (73) so that the counterweight can oscillate freely on the mounting, said device being **characterized in that** the mounting includes a window (25) that passes through the mounting in the direction of its thickness, the counterweight being, regardless of its position, contained within the virtual envelope having a prism axis Y parallel to the axis X, resting on the contour (26, 76) of the window and projecting axially from the mounting.

2. Vibration absorbing device according to the preceding claim, the counterweight projecting axially on either side of the window or,
the thickness of the counterweight and/or of a rolling body being less than or equal to the thickness of the mounting or the total thickness of the mounting and assembly flanges optionally fixed to the mounting.

3. Vibration absorbing device according to either one of the preceding claims, in which none of the rolling bodies projects axially from the counterweight and/or the mounting and/or the optional assembly flanges fixed to said mounting.

4. Vibration absorbing device according to any one of the preceding claims, including a first assembly flange fixed to the mounting and superposed on a first large face (109₁) of the counterweight and optionally on the internal and/or external rolling bodies so as to protect it (them).

5. Vibration absorbing device according to Claim 4, in which said first assembly flange is fixed to the mounting so as to sandwich a mounting protector serving to limit the amplitude of oscillation of the counterweight relative to the mounting.

6. Absorption device according to Claim 5, in which the internal rolling body and/or an external rolling body and/or both external rolling bodies do not project axially from said first assembly flange.

7. Device according to any one of Claims 4 to 6, including a second assembly flange superposed on a second large face (109₂) of the counterweight, the window (25) defining said raceways, and said first and second assembly flanges defining with said window an envelope encapsulating the counterweight and/or the rolling bodies.

8. Device according to Claim 7, including a mounting protector serving to limit the amplitude of oscillation of the counterweight relative to the mounting, said mounting protector being sandwiched between the mounting on the one hand and said first assembly flange and/or said second assembly flange on the other hand, said mounting protector notably straddling an edge of said window and being clamped between the mounting and the first flange and between the mounting and the second flange.

9. Vibration absorbing device according to Claim 7 or 8, in which said mounting protector includes a pin accommodated in an orifice in said first flange.

10. Vibration absorbing device according to any one of Claims 7 to 9, in which the first and/or the second protection flange define(s) a mounting abutment (106₁, 106₂) limiting the axial movement of a rolling body (19₁, 19₂, 22) relative to the mounting.

11. Vibration absorbing device according to any one of the preceding claims, in which at least one of the rolling bodies, preferably each of the rolling bodies, includes an annular groove receiving the mounting and the counterweight, said annular groove being shaped to prevent said mounting and said counterweight escaping form said annular groove when the counterweight oscillates.

12. Vibration absorbing device according to any one of the preceding claims, in which the mounting takes the form of a plate of thickness "e", the thickness of the vibration absorbing device measured in the direction of the thickness of said plate being less than or equal to 3.0*e.

13. Vibration absorbing device according to any one of the preceding claims, in which the mounting takes the form of a plate of thickness "e" and no rolling body projects axially from either of the two large faces of said plate more than 0.2*e and/or the counterweight does not project axially from either of the two large faces of said plate more than 0.2*e.

14. Vibration absorbing device according to Claim 13, in which no rolling body projects axially from either of the two large faces of said plate and/or no rolling body projects axially from the counterweight and/or the counterweight does not project axially from either of the two large faces of said plate.

15. Motor vehicle transmission device chosen from a friction clutch and a hydrokinetic converter, said device including a vibration absorbing device according to any one of the preceding claims.
